# EUROPEAN PATENT SPECIFICATION

(11) **EP 2 400 654 B1**
(45) Date of publication and mention of the grant of the patent: **03.05.2017**
(21) Application number: 10743430.0
(22) Date of filing: 11.02.2010
(51) Int. Cl.: H02P 9/12, H02K 19/38, H02P 9/10, H02P 9/30

(54) **RAPID DE-EXCITATION SYSTEM FOR SYNCHRONOUS MACHINES WITH INDIRECT EXCITATION**
SCHNELLES ENTREGUNGSSYSTEM FÜR SYNCHRONMOTOREN MIT INDIREKTER ERREGUNG
SYSTÈME DE DÉSEXCITATION RAPIDE POUR MACHINES SYNCHRONES À EXCITATION INDIRECTE

(30) Priority: 19.02.2009 ES 200900468
(43) Date of publication of application: 28.12.2011
(73) Proprietor: Universidad Politécnica De Madrid, 28040 Madrid (ES)
(72) Inventor: PLATERO GAONA, Carlos Antonio, E-28040 Madrid (ES); BLÁZQUEZ GARCÍA, Francisco, E-28040 Madrid (ES); FRÍAS MARÍN, Pablo, E-28015 Madrid (ES); REDONDO CUEVAS, Marta, E-28040 Madrid (ES); GRANIZO ARRABÉ, Ricardo, E-28040 Madrid (ES); CARRERO LÓPEZ, Carmelo, E-28040 Madrid (ES)
(74) Representative: ABG Patentes, S.L.
(86) International application number: PCT/ES2010/000058
(87) International publication number: WO 2010/094818

(56) References cited:
- WO-A1-93/20614
- WO-A1-2007/072007
- DE-A1- 1 763 299
- DE-A1- 1 763 299
- DE-A1- 2 127 497
- GB-A- 1 581 646
- JP-A- 55 080 066
- JP-A- S61 121 800
- US-A- 4 152 636

## Description

The object of the present invention patent is to provide a new deexcitation system for synchronous machines with indirect excitation by means of rotating diodes, whereby improving the dynamic response and safety when deexciting the machine, which means that in the event of an internal short circuit the damage to the machine would be much less.

### Background of the Invention

When internal short circuits occur in a generator, or before the generator switch, damage occurs due to the contribution to the short circuit by the generator itself. In this case it is essential to reduce the excitation current as quickly as possible, such that voltage is not induced in the stator and therefore there is no more contribution to the short circuit.

There are essentially two types of excitation for synchronous machines:
- Direct excitation by means of collector rings and brushes.
- Indirect brushless excitation by means of an excitation machine and rotating diodes.

The brushes and the collector rings are elements which require maintenance, particularly in high-powered machines. The brushes wear with use and must be replaced and maintained. Also the sparks and carbon dust deposits are always a focal point of possible problems. Therefore, excitation mechanisms for the brushless inductor tend to be used in synchronous machines.

The brush problem is eliminated with indirect excitation, but it has the drawback of worsening the dynamic response of the machine since it does not have direct access to the excitation winding of the main generator because it uses an intermediate element, another electric machine, i.e., the exciter.

In the event of an internal defect, the excitation response speed plays an essential role, limiting the contribution of the alternator to the short circuit.

This problem is solved in direct excitation machines (by means of brushes) by intercalating a resistor in the excitation circuit which is connected to deexcite the machine rapidly when a fault occurs. This is not as easy in indirect excitation machines by means of rotating diodes, where there is no direct access to the excitation winding.

The document with publication number WO9320614, relating to a method and a device for demagnetizing brushless synchronous machines, is known. This document describes a synchronous generator incorporating an excitation machine fed by a rotating rectifier bridge such that the excitation current circuit incorporates an energy damping resistor connected in parallel with a thyristor. For decoupling the excitation, the thyristor is turned off by means of a turn-off pulse transmitted by means of a ring-brush assembly.

The document with publication number DE 1763299, relating to a synchronous machine with an excitation machine, is known. This document describes the use of a synchronous machine incorporating an excitation machine fed by a rotating rectifier bridge such that the excitation current circuit incorporates an energy damping resistor connected in parallel with a controller. For turning off the excitation machine, there is provided a transformer where the primary winding is connected to the controller and the secondary winding outside the excitation machine is operated externally.

### Description of the Invention

The system object of the present invention allows a synchronous indirect excitation machine to behave for deexcitation purposes similarly to a direct excitation machine, but maintaining the advantages of brushless excitation.

The rapid deexcitation system for synchronous machines with indirect excitation by means of an excitation machine and rotating rectifier bridge comprises:
- a deexcitation impedance, preferably a resistor, connected between the field winding of the synchronous machine and the rotating rectifier bridge;
- a controller, preferably a semiconductor-type controller, connected in parallel with the deexcitation impedance;
- a control circuit of the controller configured to:
   - keep the controller closed such that the rotating rectifier bridge directly feeds the field winding of the synchronous machine during normal operation of the synchronous machine;
   - deexcite the synchronous machine (in the event of a short circuit or in the event of the disconnection of the synchronous machine from the electrical network), open the controller such that the deexcitation impedance remains in series with the field winding and with the rotating rectifier bridge.

The control circuit is preferably configured to open the controller depending on the voltage at the output of the rotating rectifier bridge such that when acting on the field winding of the exciter, the voltage at the output of the rotating rectifier bridge and therefore the deexcitation of the synchronous machine can be controlled.

In a particular embodiment the control circuit comprises:
- a voltage divider in parallel with the rotating rectifier bridge and consisting of a first auxiliary resistor and a second auxiliary resistor, said voltage divider being configured to open the controller when the voltage on the second resistor reaches a particular value.

The control circuit can additionally comprise a zener diode in parallel with the second resistor in order to limit the voltage at the control input of the controller.

As a result of the system thus described, in the event of an internal defect of the synchronous machine, the damage is limited. In a synchronous machine with conventional indirect excitation, the fault current in the event of an internal short circuit can last in the order of several seconds with the subsequent damage for the alternator. However, by implementing the deexcitation system object of the invention, this time is considerably reduced, minimizing the damage.

Throughout of the description and the claims the word "comprise" and variants thereof do not intend to exclude other technical features, supplements, components or steps. For persons skilled in the art, other objects, advantages and features of the invention will be understood in part from the description and in part from the practice of the invention. The following examples and drawings are provided by way of illustration and they are not meant to limit the present invention. Furthermore, the present invention covers all the possible combinations of particular and preferred embodiments herein indicated.

### Brief Description of the Drawings

Figure 1 shows a diagram of the rapid deexcitation system for synchronous machines with indirect excitation object of the present invention patent.
Figure 2 shows a preferred embodiment of the rapid deexcitation system for synchronous machines with indirect excitation object of the present invention patent.
Figure 3 shows the results of the simulation of a short circuit in terminals of a 2MVA synchronous machine with conventional indirect excitation.
Figure 4 shows the results of the simulation of a short circuit in terminals of the same aforementioned 2MVA synchronous machine in which the deexcitation system object of this invention has been included.

### Preferred Embodiment of the Invention

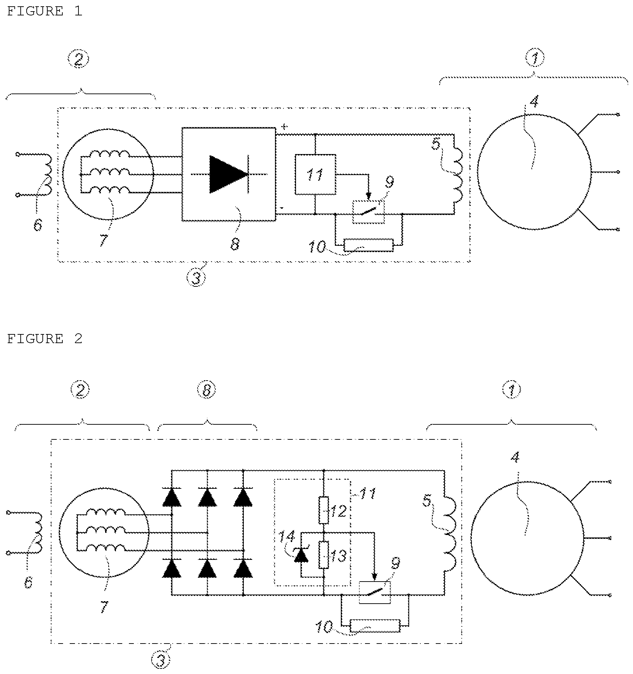

Figure 1 shows a diagram of the deexcitation method object of this invention where the following references are used:
- Synchronous machine 1
- Excitation machine 2
- Rotating components 3
- Stator 4 of the synchronous machine 1
- Field winding 5 of the synchronous machine 1
- Field winding 6 of the excitation machine 2
- Armature windings 7 of the excitation machine 2
- Rotating rectifier bridge 8
- Controller 9
- Deexcitation impedance 10
- Control circuit 11 of the controller 9.

Figure 2 shows a diagram of the preferred embodiment, where the following references are additionally used:
- Voltage divider formed by a first resistor 12 and a second resistor 13.
- Zener diode 14 for protecting the controller 9.

As can be observed in Figure 1 the rapid deexcitation system for synchronous machines with indirect excitation comprises at least one set of rotating components connected between the rotating rectifier bridge 8 and the field winding 5 of the main synchronous machine 1.

Said rotating components in turn and at least comprise a deexcitation impedance 10, a controller 9 and a control circuit 11 of the controller 9, these elements in turn being connected with the field winding 5 of the synchronous machine 1.

The deexcitation impedance 10 is connected in series with the field winding 5 and the controller 9 which is connected in parallel with the deexcitation impedance 10.

In the case of normal operation of the synchronous machine 1, the controller 9 is closed such that the rotating rectifier bridge 8 feeds the field winding 5 of the synchronous machine 1, as it would in a conventional synchronous machine.

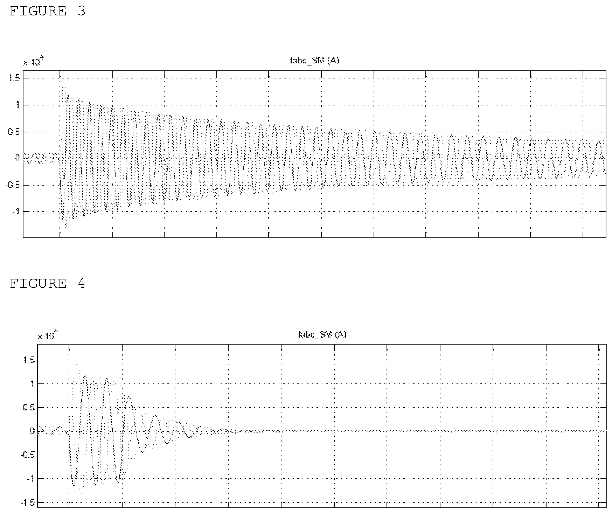

Nevertheless, in the event that the synchronous machine 1 is to be deexcited, the control circuit 11 sends a command to open the controller 9 such that the deexcitation impedance 10 remains in series with the field winding 5 of the synchronous machine 1 and with the rotating rectifier bridge 8, such that the current in the field winding 5 of the synchronous machine 1 tends to die down very rapidly (see Figure 4) as a result of the deexcitation impedance 10.

Figures 3 and 4 show the results of two simulations in which a short circuit has been simulated in terminals of a synchronous machine with indirect excitation. Figure 3 corresponds to the short circuit current in the case of traditional indirect excitation, while Figure 4 shows the result of implementing the system object of this invention patent in the earlier machine, and it can also be seen that the duration of the short circuit current is considerably reduced.

A semiconductor, IGBT transistor or the like will be used as a controller 9 such that the possible problems that may be created by the centrifugal force in a mechanical controller such as a contactor or automatic switch are prevented. This semiconductor will additionally be triggered, i.e., conduct, when the voltage at its control input or gate is positive and has a particular value. A control circuit 11 will be used to achieve this control voltage, such circuit 11 in turn and at least comprising a voltage divider formed by two auxiliary resistors, a first resistor 12 and a second resistor 13. Therefore, no control element outside the generator rotor is required. Finally, the input at the gate of the semiconductor will be protected by means of a zener diode (14) or another overvoltage protection element.

## Claims

1. A rapid deexcitation system for synchronous machines
(1) with indirect excitation by means of an excitation machine
(2) and rotating rectifier bridge (8), comprising:
- a deexcitation impedance (10) connected between the field winding (5) of the synchronous machine (1) and the rotating rectifier bridge (8);
- a controller (9) connected in parallel with the deexcitation impedance (10);
- a control circuit (11) of the controller (9) configured such that:
∘ the controller (9) is kept closed such that the rotating rectifier bridge (8) directly feeds the field winding (5) of the synchronous machine (1) during normal operation of the synchronous machine (1);
∘ the controller (9) is opened such that the deexcitation impedance (10) remains in series with the field winding (5) and with the rotating rectifier bridge (8) when the synchronous machine is to be deexcited;
**characterized in that** said control circuit (11) is configured to open the controller (9) depending on the voltage at the output of the rotating rectifier bridge (8).

2. The system according to claim 1, **characterized in that** the control circuit (11) comprises:
- a voltage divider in parallel with the rotating rectifier bridge (8) and comprising a first auxiliary resistor (12) and a second auxiliary resistor (13), said voltage divider being configured to close the controller (9) when the voltage on the second resistor (13) reaches a particular value.

3. The system according to claim 2, **characterized in that** the control circuit (11) additionally comprises a zener diode (14) in parallel with the second resistor (13) and configured for the protection of the controller (9).

4. The system according to any of the preceding claims, **characterized in that** the deexcitation impedance (10) is a resistor.

5. The system according to any of the preceding claims, **characterized in that** the controller (9) is a static switch.

## Patentansprüche

1. Ein System zur Schnellentregung für Synchronmaschinen (1) mit indirekter Erregung durch eine Erregermaschine (2) und eine rotierende Gleichrichterbrücke (8), umfassend:
- eine Entregungs-Impedanz (10), verbunden zwischen der Feldwicklung (5) der Synchronmaschine (1) und der rotierenden Gleichrichterbrücke (8);
- eine Steuereinrichtung (9), die parallel mit der Entregungs-Impedanz (10) verbunden ist;
- einen Kontroll-Schaltkreis (11) der Steuereinrichtung (9), der angepasst ist, so dass:
▪ die Steuereinrichtung (9) geschlossen gehalten wird, so dass während des Normalbetriebs der Synchronmaschine (1) die rotierende Gleichrichterbrücke (8) die Feldwicklung der Synchronmaschine (1) direkt speist;
▪ die Steuereinrichtung (9) geöffnet wird, so dass die Entregungs-Impedanz (10) in Reihe mit der Feldwicklung (5) und der rotierenden Gleichrichterbrücke (8) geschaltet bleibt, wenn die Synchronmaschine entregt werden soll;
**gekennzeichnet dadurch, dass** der Kontroll-Schaltkreis (11) dazu eingerichtet ist, die Steuereinrichtung (9) abhängig von der Spannung am Ausgang der rotierenden Gleichrichterbrücke (8) zu öffnen.

2. System nach Anspruch 1, **gekennzeichnet dadurch, dass** der Kontroll-Schaltkreis (11) umfasst:
- einen Spannungsteiler parallel zu der rotierenden Gleichrichterbrücke (8), umfassend einen ersten Hilfs-Widerstand (12) und einen zweiten Hilfs-Widerstand (13), wobei der Spannungsteiler dazu eingerichtet ist, die Steuereinrichtung (9) zu schließen wenn die Spannung am zweiten Widerstand (13) einen bestimmten Wert erreicht.

3. System nach Anspruch 2, **gekennzeichnet dadurch, dass** der Kontroll-Schaltkreis (11) zusätzlich eine Zenerdiode (14) parallel zu dem zweiten Widerstand (13) umfasst, die zum Schutz der Steuereinrichtung (9) ausgelegt ist.

4. System nach irgendeinem der vorhergehenden Ansprüche, **gekennzeichnet dadurch, dass** die Entregungs-Impedanz (10) ein Widerstand ist.

5. System nach irgendeinem der vorhergehenden Ansprüche, **gekennzeichnet dadurch dass** die Steuereinrichtung (9) ein statischer Schalter ist.

## Revendications

1. Système de désexcitation rapide pour machines synchrones (1) à excitation indirecte au moyen d'une machine à excitation (2) et d'un pont redresseur rotatif (8), comprenant :
- une impédance de désexcitation (10) connectée entre l'enroulement inducteur (5) de la machine synchrone (1) et le pont redresseur rotatif (8) ;
- un contrôleur (9) connecté en parallèle à l'impédance de désexcitation (10) ;
- un circuit de commande (11) du contrôleur (9) configuré afin de :
∘ maintenir le contrôleur (9) fermé de sorte que le pont redresseur rotatif (8) alimente directement l'enroulement inducteur (5) de la machine synchrone (1) pendant le fonctionnement normal de la machine synchrone (1) ;
∘ ouvrir le contrôleur (9) de sorte que l'impédance de désexcitation (10) reste connectée en série à l'enroulement inducteur (5) et au pont redresseur rotatif (8) lorsque la machine synchrone doit être désexcitée ;
**caractérisé en ce que** ledit circuit de commande (11) est configuré pour ouvrir le contrôleur (9) en fonction de la tension de sortie du pont redresseur rotatif (8).

2. Système selon la revendication 1, **caractérisé en ce que** le circuit de commande (11) comprend :
- un diviseur de tension connecté en parallèle au pont redresseur rotatif (8) et comprenant une première résistance auxiliaire (12) et une seconde résistance auxiliaire (13), ledit diviseur de tension étant configuré pour fermer le contrôleur (9) lorsque la tension de la seconde résistance (13) atteint une valeur donnée.

3. Système selon la revendication 2, **caractérisé en ce que** le circuit de commande (11) comprend en outre une diode zener (14) connectée en parallèle à la seconde résistance (13) et configurée pour protéger le contrôleur (9).

4. Système selon l'une quelconque des revendications précédentes, **caractérisé en ce que** l'impédance de désexcitation (10) est une résistance.

5. Système selon l'une quelconque des revendications précédentes, **caractérisé en ce que** le contrôleur (9) est un commutateur statique.
